Europäisches Patentamt

European Patent Office

Office européen des brevets

(11) Veröffentlichungsnummer: **0 180 803**
**B1**

(12) # EUROPÄISCHE PATENTSCHRIFT

(45) Veröffentlichungstag der Patentschrift:
**29.06.88**

(21) Anmeldenummer: **85112830.6**

(22) Anmeldetag: **10.10.85**

(51) Int. Cl.⁴: **C 22 B 11/08,** C 22 B 3/00,
C 01 G 5/00, C 01 G 7/00,
C 01 G 55/00

(54) **Verfahren zur Rückgewinnung von Edelmetallen aus ihren Cyanidkomplexen.**

(30) Priorität: **02.11.84 DE 3440086**

(43) Veröffentlichungstag der Anmeldung:
**14.05.86 Patentblatt 86/20**

(45) Bekanntmachung des Hinweises auf die Patenterteilung:
**29.06.88 Patentblatt 88/26**

(84) Benannte Vertragsstaaten:
**BE CH DE FR GB IT LI LU NL**

(56) Entgegenhaltungen:
**EP-A-0 049 807
DE-A-2 808 961
US-A-3 664 829
US-A-4 289 532
US-A-4 392 962
US-A-4 418 043**

(73) Patentinhaber: **HOECHST AKTIENGESELLSCHAFT,
Postfach 80 03 20, D-6230 Frankfurt am Main 80
(DE)**

(72) Erfinder: **Ulrich, Hannsjörg, Dr., Von-
Bodelschwingh- Weg 47, D-5042 Erftstadt (DE)**
Erfinder: **Prestin, Peter, Grippekovener Strasse
122, D-5030 Hürth (DE)**

## Beschreibung

Die Vorliegende Erfindung betrifft ein Verfahren zur Rückgewinnung von Silber bzw. Gold aus ihren Cyanidkomplexen in wäßriger Lösung durch Umsetzung mit rotem Phosphor.

Aus der US-A-4 392 962 ist ein Verfahren zur Abtrennung von Halbedel- oder Edelmetallen aus wäßrigen Lösungen, welche Verbindungen dieser Metalle gelöst enthalten, bekannt. Dabei läßt man die wäßrigen Lösungen durch eine Kolonne hindurchlaufen, welche in zwei Zonen unterteilt ist. Die obere Zone besteht aus einer Schicht aus körnigem rotem Phosphor, welchem gegebenenfalls Aktivkohle beigemischt sein kann, während die untere Zone aus Aktivkohle aufgebaut ist.

Dieses Verfahren ist anwendbar, wenn die Halbedel- oder Edelmetalle ionogen gelöst vorliegen und für den Fall, daß sie in komplexer Bindung vorliegen nur dann, wenn die von der Art der Liganden abhängige Stabilität der Komplexe gering ist, d. h. das Gleichgewicht dieser Komplexe sehr auf der Seite der ionogenen Lösung liegt. Dies ist beispielsweise so beim Silberdiaminkomplex, welcher gemäß dem bekannten Verfahren glatt zu elementarem Silber reduziert wird. Schon schwieriger zu reduzieren ist der Silberthiosulfatkomplex, welcher beispielsweise in gebrauchten Fixierbädern photographischer Prozesse vorliegt. Um den Silberthiosulfatkomplex zu elementarem Silber zu reduzieren, muß man das bekannte Verfahren so modifizieren, daß man es bei erhöhter Temperatur und pH-Werten zwischen 8 und 10 ablaufen läßt. Aber auch diese flankierenden Maßnahmen reichen nicht aus, um Silber und Gold, welche in einem der wichtigsten technischen Komplexsysteme, nämlich als Cyanide vorliegen, in elementare Form zu überführen.

In der Galvanoindustrie und in der Gold- und Silber-Scheiderei fallen in großem Maßstab Abwässer an, welche Silber- und/oder Goldgehalte von 100 mg/l und darüber aufweisen. Solche Abwässer stellen einerseits wegen ihrer Edelmetallgehalte einen wirtschaftlichen Verlust und andererseits aus umweltrelevanter Sicht eine Belastung des Oberflächenwassers dar. Deshalb ist beispielsweise der Silbergehalt von Abwässern, welche an Vorfluter abgegeben werden, begrenzt worden. Daneben stellen auch die in solchen Abwässern enthaltenen Cyanidfrachten eine erhebliche Gefährdung dar. Aus diesen Gründen sind derartige Abwässer vor ihrer Abgabe in den Vorfluter einem aufwendigen, mehrstufigen Klärungs- und Entgiftungsprozeß zu unterwerfen, in dessen Verlauf die Edelmetalle durch Ionenaustausch, beispielsweise gemäß der JP-B-55-25 915, zurückgewonnen werden.

Es ist Aufgabe des vorliegenden Erfindung, ein Verfahren zur Rückgewinnung von Silber bzw. Gold, welche in wäßriger Lösung als Cyanidkomplexe vorliegen, durch Umsetzung mit rotem Phosphor anzugeben, welches in einfacher und wirtschaftlich vertretbarer Weise unter gleichzeitiger Zerstörung der Cyanide durchzuführen ist. Das wird erfindungsgemäß dadurch erreicht, daß der Phosphor in Mengen von 0,4 (im Fall des Silbers) bzw. von 0,6 (im Fall des Goldes) bis 5 Gewichtsprozent und zusätzlich 1 bis 20 Volumenprozent einer Hypochloritlösung und/oder einer wäßrigen Peroxidlösung - beides bezogen auf die wäßrige Lösung der Cyanidkomplexe - eingesetzt werden und daß man die Umsetzung unter Rühren - beim Silbercyanidkomplex bei Raumtemperatur bzw. beim Goldcyanidkomplex bei Temperaturen oberhalb von 80° C durchführt.

Das Verfahren gemäß der Erfindung kann wahlweise auch noch dadurch ausgestaltet sein, daß
a) als Hypochloritlösung Bleichlauge verwendet ist;
b) als Peroxidlösung Wasserstoffperoxid mit einem $H_2O_2$-Gehalt von 1 bis 30 Gewichtsprozent verwendet ist.

Beim erfindungsgemäßen Verfahren wird das in der Lösung als Cyanidkomplex enthaltene Silber bzw. Gold unter gleichzeitiger oxidativer Vernichtung der Cyanidionen zum Element reduziert.

Nach Durchführung des erfindungsgemäßen Verfahrens sollte die resultierende Suspension filtriert werden, wobei das Filtrat gegebenenfalls einer Neutralisation zu unterwerfen ist, während der mit Silber bzw. Gold beladene rote Phosphor je nach seinem Beladungsgrad entweder wiederverwendet oder einer Edelmetall-Phosphor-Trennung zugeführt wird. Der bei der Filtration anfallende Abluftstrom muß aus Sicherheitsgründen einer Gaswäsche unterworfen werden.

**Beispiel 1** (Vergleichsbeispiel)

500 ml einer Na[Ag(CN)₂]-Lösung (entnommen aus der sog. Sparspüle eines Galvanikbetriebes) mit 100 mg Silber/l wurden mit 25 ml technischer Chlorbleichlauge (13 % Aktivchlor) versetzt und 8 Stunden unter Rühren auf 100°C erhitzt. Dabei fiel eine geringe Menge eines weißlichen Niederschlages an. Das nach Abtrennen des Niederschlages resultierende Filtrat enthielt noch 56 mg Silber/l und 29 mg Cyanid/l.

**Beispiel 2** (Vergleichsbeispiel)

500 ml der gleichen Na[Ag(CN)₂]-Lösung wie in Beispiel 1 wurden mit 10 g rotem Phosphor (Typ NF der HOECHST AG, Werk Knapsack) versetzt und 6 Stunden am Rückfluß gekocht. Nach Abkühlung wurde die Suspension filtriert. Das Filtrat enthielt noch 98 mg Silber/l und 52 mg Cyanid/l.

**Beispiel 3** (gemäß der Erfindung)

500 ml der gleichen Na[Ag(CN)₂]-Lösung wie in Beispiel 1 wurden mit 5 g rotem Phosphor (Typ NF der HOECHST AG, Werk Knapsack) und 25 ml technischer Chlorbleichlauge (13 % Aktivchlor) versetzt und bei Raumtemperatur gerührt. Nach 30, 60 und 120 Minuten wurden Proben entnommen, filtriert und analysiert.

2

| Probenahme nach Minuten | Gehalt an | |
| --- | --- | --- |
| | Silber [mg/l] | Cyanid [mg/l] |
| 30 | 1,7 | 2,1 |
| 60 | <1 | <1 |
| 120 | <0,5 | <1 |

**Beispiel 4**

500 ml einer Na[Ag(CN)$_2$]-Lösung wie in Beispiel 1 wurden mit 4 g rotem Phosphor (Typ NF der HOECHST AG, Werk Knapsack) und 5 ml technischer Chlorbleichlauge (13 % Aktivchlor) versetzt und 4 Stunden bei Raumtemperatur gerührt. Nach 30, 60, 120 und 240 Minuten wurden Proben entnommen, filtriert und analysiert.

| Probenahme nach Minuten | Gehalt an | |
| --- | --- | --- |
| | Silber [mg/l] | Cyanid [mg/l] |
| 30 | 7 | 3,8 |
| 60 | 3,5 | 2,0 |
| 120 | 1 | <1 |
| 240 | <1 | <1 |

**Beispiel 5** (gemäß der Erfindung)

500 ml einer Na[Au(CN)$_2$]-Lösung (entnommen aus der sog. Sparspüle eines Galvanikbetriebes) mit 100 mg Gold/l wurden mit 3 g rotem Phosphor (Typ NF der HOECHST AG, Werk Knapsack) 5 ml technischer Chlorbleichlauge (13 % Aktivchlor) versetzt und am Rückfluß gekocht. Nach 30, 60 und 120 Minuten wurden Proben entnommen, filtriert und analysiert.

| Probenahme nach Minuten | Gehalt an | |
| --- | --- | --- |
| | Silber [mg/l] | Cyanid [mg/l] |
| 30 | 16 | 4,5 |
| 60 | 2,5 | <1 |
| 120 | <1 | <1 |

**Beispiel 6**

500 ml einer Na[Au(CN)$_2$]-Lösung wie in Beispiel 5 wurden mit 5 g rotem Phosphor (Typ NF der HOECHST AG, Werk Knapsack) und 25 ml technischer Chlorbleichlauge (13 % Aktivchlor) versetzt und am Rückfluß gekocht. Nach 30 Minuten wurde eine Probe entnommen, filtriert und analysiert. Die Gehalte der Probe an Gold- und Cyanidionen lagen jeweils unter 1 mg/l.

**Beispiel 7**

500 ml einer [Na[Ag(CN)$_2$]-Lösung wie in Beispiel 1 wurden mit 2 g rotem Phosphor (Typ NF der HOECHST AG, Werk Knapsack) und 6 ml Perhydrol (30 Gewichts- % H$_2$O$_2$) versetzt und 4 Stunden bei Raumtemperatur gerührt. Nach 30 und 240 Minuten wurden Proben entnommen, filtriert und analysiert.

| Probenahme nach Minuten | Gehalt an | |
| --- | --- | --- |
| | Silber [mg/l] | Cyanid [mg/l] |
| 30 | 9 | 5 |
| 240 | <0,5 | <1 |

**Beispiel 8**

500 ml einer Na[Au(CN)$_2$]-Lösung wie im Beispiel 5 wurden mit 5 g rotem Phosphor (Typ NF der HOECHST AG, Werk Knapsack) und 25 ml wäßriger H$_2$O$_2$-Lösung (10 Gewichts- % H$_2$O$_2$) versetzt, langsam erwärmt und unter Rückfluß 1 Stunde gekocht. Eine nach 60 Minuten entnommene Probe wurde filtriert und analysiert. Die Gehalte an Gold- und Cyanidionen lagen jeweils unter 1 mg/l.

**Patentansprüche**

1. Verfahren zur Rückgewinnung von Silber aus seinen Cyanidkomplexen in wäßriger Lösung durch Umsetzung mit rotem Phosphor, bei dem der rote Phosphor in Mengen von 0,4 bis 5 Gewichtsprozent und zusätzlich 1 bis 20 Volumenprozent einer Hypochloritlösung und/oder einer wäßrigen Peroxidlösung - beides bezogen auf die wäßrige Lösung der Silbercyanidkomplexe - eingesetzt werden und bei dem die Umsetzung unter Rühren bei Raumtemperatur durchführt.

2. Verfahren zur Rückgewinnung von Gold aus seinen Cyanidkomplexen in wäßriger Lösung durch Umsetzung mit rotem Phosphor bei dem der rote Phosphor in Mengen von 0,6 bis 5 Gewichtsprozent und zusätzlich 1 bis 20 Volumenprozent einer Hypochloritlösung und/oder einer wäßrigen Peroxidlösung - beides bezogen auf die wäßrige Lösung der Goldcyanidkomplexe - eingesetzt werden und bei dem man die Umsetzung unter Rühren bei Temperaturen oberhalb von 80° C durchführt.

3. Verfahren nach Anspruch 1 oder 2, <u>dadurch gekennzeichnet</u>, daß als Hypochloritlösung Bleichlauge verwendet ist.

4. Verfahren nach Anspruch 1 oder 2, <u>dadurch gekennzeichnet</u>, daß als Peroxidlösung Wasserstoffperoxid mit einem H$_2$O$_2$-Gehalt von 1 bis 30 Gewichtsprozent verwendet ist.

**Claims**

1. Process for recovering silver from its cyanide complexes in aqueous solution by reaction with red phosphorus, wherein the red phosphorus is used in quantities of 0.4 to 5 wgt % and a hypochlorite solution and/or aqueous peroxide solution are additionally used in quantities of 1 to 20 volume %, the two percentages being based on the aqueous solution of the silver cyanide complexes, and the reaction is effected while stirring at room temperature.

2. Process for recovering gold from its cyanide complexes in aqueous solution by reaction with red phosphorus, wherein the red phosphorus is used in quantities of 0.6 to 5 wgt % and a hypochlorite solution and/or aqueous peroxide solution are additionally used in quantities of 1 to 20 volume %, the two percentages being based on the aqueous solution of the gold cyanide complexes, and the reaction is effected while stirring at temperatures higher than 80° C.

3. Process as claimed in claim 1 or 2, wherein bleaching liquor is used as the hypochlorite solution.

4. Process as claimed in claim 1 or 2, wherein hydrogen peroxide containing 1 to 30 wgt % H$_2$O$_2$ is used as the peroxide solution.

**Revendications**

1. Procédé de récupération de l'argent de ses complexes de cyanures en solution aqueuse par réaction avec du phosphore rouge, dans lequel on utilise le phosphore rouge en quantités de 0,4-5% en poids et, en outre, 1-20% en volume d'une solution d'hypochlorite et/ou d'une solution aqueuse de peroxyde - les deux pourcentages étant rapportés à la solution aqueuse des complexes de cyanure d'argent - et on met en oeuvre la réaction en agitant à la température ambiante.

2. Procédé de récupération d'or de ses complexes cyanures en solution aqueuse par réaction avec du phosphore rouge, dans lequel on utilise le phosphore rouge en quantités de 0,6-5% en poids et, en outre, 1-20% en volume d'une solution d'hypochlorite et/ou d'une solution aqueuse de peroxyde - les deux pourcentages étant rapportés à la solution aqueuse des complexes de cyanure d'or - et on met en oeuvre la réaction en agitant à des températures supérieures à 80° C.

3. Procédé selon la revendication 1 ou 2, caractérisé en ce que l'on utilise l'eau de Javal comme solution d'hypochlorite.

4. Procédé selon la revendication 1 ou 2, caractérisé en ce que, comme solution de peroxyde, on utilise l'eau oxygénée d'une teneur en H$_2$O$_2$ de 1-30% en poids.